# EUROPÄISCHE PATENTSCHRIFT

(11) **EP 1 400 722 B1**
(45) Veröffentlichungstag und Bekanntmachung des Hinweises auf die Patenterteilung: **04.01.2006**
(21) Anmeldenummer: 03007713.5
(22) Anmeldetag: 04.04.2003
(51) Int. Cl.: F16F 9/12

(54) **Vorrichtung zur Verlangsamung einer relativen Drehbewegung zwischen zwei zueinander drehbeweglichen Bauteilen**
Device to retard the relative rotation between two relatively rotatable pieces
Dispositif pour retarder la rotation entre deux pièces susceptibles d'une rotation relative

(30) Priorität: 17.09.2002 DE 10242981
(43) Veröffentlichungstag der Anmeldung: 24.03.2004
(73) Patentinhaber: KENDRION RSL GmbH & Co.KG, 57368 Lennestadt (DE)
(72) Erfinder: Kramer, Stefan, 57234 wilnsdorf (DE)
(74) Vertreter: Köchling, Conrad-Joachim

(56) Entgegenhaltungen:
- BE-A- 1 013 458
- DE-A- 3 313 220
- DE-U- 29 721 962
- US-A- 3 952 365
- US-A- 4 893 522
- PATENT ABSTRACTS OF JAPAN vol. 2002, no. 10, 10. Oktober 2002 (2002-10-10) & JP 2002 181104 A (FUJI SEIKI CO LTD;SOMIC ISHIKAWA INC), 26. Juni 2002 (2002-06-26)

## Beschreibung

Die Erfindung betrifft eine Vorrichtung zur Verlangsamung einer relativen Drehbewegung zwischen zwei zueinander drehbeweglich oder schwenkbeweglich angeordneten Bauteilen, mit einem viskosen Medium, insbesondere Silikonöl, wobei zwischen den beiden Bauteilen wenigstens ein Spalt gebildet ist, in dem sich das viskose Medium befindet, das durch seine Viskosität eine Bremskraft auf das bewegte Bauteil ausübt.

Solche Vorrichtungen sind im Stand der Technik bekannt. Es wird hierzu beispielsweise auf die EP 0900691 A3 verwiesen. Obwohl sich eine derartige Ausbildung im Stand der Technik bewährt hat, besteht ein Bedarf dahingehend, eine äußerst kostengünstige Vorrichtung gattungsgemäßer Art zu schaffen, die frei und ohne Anschlag drehbar ist, eine verzögerte Bremswirkung nach einem gewissen Anlaufwinkel erreicht, eine drehrichtungsunabhängige Verzögerung sicherstellt und vorzugsweise auch ein kombiniertes Bremsmoment aus viskoser Scherung und mechanischer Bremse ermöglicht.

Zur Lösung dieser Aufgabe wird vorgeschlagen, dass das erste der beiden Bauteile ein Gehäuse mit einer koaxial zur Drehachse ausgerichteten einseitig offenen Ringkammer ist, das zweite Bauteil ein die Mündung der Ringkammer dicht verschließendes Deckelteil ist, von dem ein nach Art einer Schraubenfeder ausgebildetes Teil einseitig abragt und in die Ringkammer des Gehäuses eingreift, und die Ringkammer mit dem viskosen Medium gefüllt ist.

Gemäß dieser Ausbildung besteht die erfindungsgemäße Vorrichtung aus unkomplizierten einfachen Teilen, die vorzugsweise als urgeformte Kunststoffteile gefertigt werden können. Die Vorrichtung kann beispielsweise dazu verwendet werden, eine beschleunigte Rotationsbewegung sanft abzubremsen, beispielsweise die Rückklappbewegung eines gegen Federkraft in Funktionsstellung klappbaren Haltegriffes in Kraftfahrzeugen oder auch die Ausfahrbewegung eines so genannten Cupholders sanft abzubremsen. Die Vorrichtung besteht im Prinzip aus dem Gehäuseteil mit der Ringkammer, dem Deckelteil, dem als Schraubenfeder ausgebildeten Teil und der Füllung mit viskosem Medium. Das nach Art einer Schraubenfeder ausgebildete Teil ist vorzugsweise einstückig mit dem Deckelteil ausgebildet oder aber in geeigneter Weise drehfest mit dem Deckelteil verbunden.

Vorteilhafte Weiterbildungen sind in den Unteransprüchen angegeben. Das vorzugsweise als Rotor dienende Deckelteil, von dessen Innenseite das zu einer Schraubenfeder geformte Teil abragt, welches vorzugsweise Rechteckquerschnitt oder dergleichen aufweist, dient als Deckel für das Gehäuseteil. Im Zusammenbau sind das Deckelteil und das Gehäuse so miteinander verklippst, dass das Deckelteil als Rotor frei drehen kann. Dabei ist das nach Art einer Schraubenfeder ausgebildete Teil soweit zusammengedrückt, dass sich zwischen den einzelnen Windungen nur ein geringer Restspalt ergibt. Ebenso wie zwischen den Windungen ergibt sich auch zwischen der Innenwandung der Ringkammer und der Außenwandung der den Ringraum begrenzenden Wandung ein geringer Abstandsspalt zur Schraubenfeder. Im Inneren der Ringkammer befindet sich das viskose Medium, vorzugsweise Silikonöl, welches das nach Art einer Schraubenfeder ausgebildete Teil des als Rotor ausgebildeten Deckelteils komplett umspült. Als Dichtelemente sind vorzugsweise zwei O-Ringe im Mündungsbereich der Ringkammer angeordnet.

Wird das Deckelteil als Rotor von außen in Drehung versetzt, während das Gehäuseteil gleichzeitig fest installiert ist, ergibt sich ein Drehmoment, welches der Drehbewegung entgegengesetzt ist. Dieses Bremsmoment ist proportional zur Drehgeschwindigkeit und baut seine maximale Wirkung erst nach einem gewissen Verzögerungswinkel (Drehwinkel) auf. Durch die in Silikonöl gelagerte Schraubenfeder verwindet sich bei der Drehbewegung des als Rotor dienenden Deckelteils jede einzelne Windung der Schraubenfeder nacheinander, nach Art einer Kettenreaktion. Erst dann, wenn die komplette Schraubenfeder verwunden ist, drehen alle Windungen mit der gleichen Geschwindigkeit in der viskosen Masse (im Silikonöl).

In diesem Zustand wird das zähe Silikonöl entlang des sehr langen Spaltes zwischen allen Windungen des schraubenfederartigen Teiles hin und her gespült (Scherspannung). Außerdem wird durch das Verwinden des schraubenfederartigen Teils ein Aufweiten bzw. ein Verengen (je nach Drehrichtung) des Durchmessers des schraubenfederartigen Teils erzielt, so dass sich das schraubenfederartige Teil wie ein Bremsschuh an die Innenwandung oder Außenwandung der Ringkammer des Gehäuseteils anlegen kann, so dass eine mechanische Bremswirkung erzeugt wird. Insgesamt wird eine Vorrichtung zur Verfügung gestellt, die äußerst kostengünstig gefertigt werden kann, die eine hohe Betriebssicherheit aufweist, die eine frei drehende Dämpfung ohne Anschlag realisiert, bei der eine verzögerte Bremswirkung nach einem gewissen Anlaufwinkel (Drehwinkel) eintritt, bei der die verzögerte Bremswirkung drehrichtungsunabhängig eintritt und bei der ein kombiniertes Bremsmoment aus viskoser Scherung und mechanischer Bremse erreicht wir.

Ein Ausführungsbeispiel der Erfindung ist in der Zeichnung dargestellt und im Folgenden näher beschrieben.

Es zeigt:
- Figur 1: eine erfindungsgemäße Vorrichtung in Seitenansicht im Mittel- Längsschnitt C-C gesehen;
- Figur 2: die Vorrichtung in Vorderansicht;
- Figur 3 und Figur 4: eine Einzelheit in unterschiedlichen Positionen.

In der Zeichnung ist eine Vorrichtung zur Verlangsamung einer relativen Drehbewegung zwischen zwei zueinander drehbeweglich oder schwenkbeweglich angeordneten Bauteilen gezeigt. Das erste der beiden Bauteile ist ein Gehäuse 2 mit einer koaxial zur Drehachse 5 ausgerichteten, einseitig offenen Ringkammer 6, deren Mündung in der Zeichnungsfigur 1 nach links gerichtet ist.

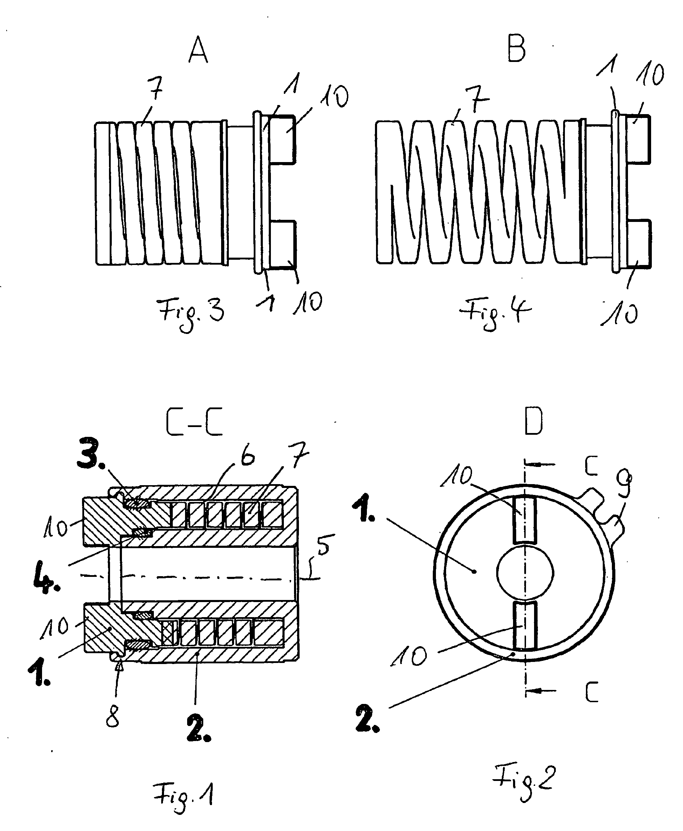

Das zweite Bauteil ist ein die Mündung der Ringkammer 6 dicht verschließendes Deckelteil 1, welches relativ zum Gehäuse 2 um die Drehachse 5 drehbar ist und als Rotor bezeichnet werden kann. Von dem Deckelteil 1 ragt einseitig ein nach Art einer Schraubenfeder ausgebildetes Teil 7 ab, welches in die Ringkammer 6 des Gehäuses 2 eingreift. Die Ringkammer 6 ist mit viskosem Medium, beispielsweise Silikonöl, gefüllt. Vorzugsweise ist das schraubenfederartige Teil 7 einstückig an das Deckelteil 1 angeformt. Der Querschnitt der Windungen des schraubenfederartigen Teiles 7 ist vorzugsweise rechteckig, wie insbesondere aus Figur 1 ersichtlich ist.

Das Deckelteil 1 ist vorzugsweise mit dem Gehäuse 2 leicht drehbar verklippst (Verklippsung bei 8). Vom Deckelteil 1 ragt ein ringförmiger Stutzen ab, der in die Mündung der Ringkammer 6 hineinragt und gegenüber den umgebenden Wandungen der Ringkammer 6 mittels O-Ringen 3,4 gedichtet ist.

In der Funktionslage, die in Figur 1 anschaulich dargestellt ist, stützt sich das freie, dem Deckelteil 1 abgewandte Ende des schraubenartigen Teiles 7 am Boden der Ringkammer 6 des Gehäuses 2 ab, wobei in dieser Solllage das Teil soweit zusammengedrückt ist, dass sich zwischen den Windungen nur ein geringer Restspalt ergibt. Ebenso ist zwischen der Außenwandung und der Innenwandung der Ringkammer nur ein geringer Ringspalt zum Teil 7 hin gebildet. Wird nun das Deckelteil 1 von außen relativ zum Gehäuse 2 in Drehung gesetzt, während gleichzeitig das Gehäuse 2 beispielsweise fest eingebaut ist, ergibt sich ein Drehmoment, das der Drehbewegung entgegengesetzt ist.

Dieses Bremsmoment ist proportional zur Drehgeschwindigkeit und baut seine maximale Wirkung erst nach einem gewissen Verzögerungswinkel (Drehwinkel). Das in Silikonöl befindliche Teil 7 verwindet sich bei einer Drehbewegung des Deckelteils 1 und zwar jede einzelne Windung der Schraubenfeder nacheinander. Erst wenn die komplette Schraubenfeder verwunden ist, drehen alle Windungen mit gleicher Geschwindigkeit in dem Silikonöl. In diesem Zustand wird das zähe Silikonöl entlang des sehr langen Spaltes zwischen den Windungen hin und her gespült (Scherspannung). Außerdem wird durch das Verwinden der Windungen des Teiles 7 ein Aufweiten bzw. Verengen des Schraubenfederdurchmessers erzielt, wodurch sich die Schraubenfeder mit ihren Windungen wie ein Bremselement mechanisch an die Kammerwandung der Kammer 6 anlegen kann.

Das Gehäuse 2 und auch das Deckelteil 1 sind von einer koaxial zur Drehachse 5 der beiden Teile gerichteten Lochung durchsetzt, so dass hier ein Lagerbolzen oder Halteelement eingesetzt werden kann. Zusätzlich kann das Gehäuse 2 eine Kontur 9 aufweisen, mittels derer es drehfest an ein Funktionsteil angeordnet werden kann. An der Stirnseite des Deckelteils 1 können Konturen 10 ausgebildet sein, die mit einem Funktionsteil zu dessen drehfester Mitnahme gekoppelt werden können.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Vorrichtung zur Verlangsamung einer relativen Drehbewegung zwischen zwei zueinander drehbeweglich oder schwenkbeweglich angeordneten Bauteilen, mit einem viskosen Medium, insbesondere Silikonöl, wobei zwischen den beiden Bauteilen wenigstens ein Spalt gebildet ist, in dem sich das viskose Medium befindet, das durch seine Viskosität eine Bremskraft auf das bewegte Bauteil ausübt, **dadurch gekennzeichnet, dass** das erste der beiden Bauteile ein Gehäuse (2) mit einer koaxial zur Drehachse ausgerichteten einseitig offenen Ringkammer (6) ist, das zweite Bauteil ein die Mündung der Ringkammer (6) dicht verschließendes Deckelteil (1) ist, von dem ein nach Art einer Schraubenfeder ausgebildetes Teil (7) einseitig abragt und in die Ringkammer des Gehäuses (2) eingreift, und die Ringkammer (6) mit dem viskosen Medium gefüllt ist.

2. Vorrichtung nach Anspruch 1, **dadurch gekennzeichnet, dass** das schraubenfederartige Teil (7) an das Deckelteil (1) angeformt ist.

3. Vorrichtung nach einem der Ansprüche 1 oder 2, **dadurch gekennzeichnet, dass** der Querschnitt der Windung des schraubenfederartigen Teils (7) rechteckig ist.

4. Vorrichtung nach einem der Ansprüche 1 bis 3, **dadurch gekennzeichnet, dass** das Deckelteil (1) mit dem Gehäuse (2) drehbar verklippst ist.

5. Vorrichtung nach einem der Ansprüche 1 bis 4, **dadurch gekennzeichnet, dass** vom Deckelteil (1) ein ringförmiger Stutzen abragt, der in die Mündung der Ringkammer (6) des Gehäuseteils (2) hineinragt und gegenüber den umgebenden Wandungen der Ringkammer (6) gedichtet ist, insbesondere mittels O-Ringen.

6. Vorrichtung nach einem der Ansprüche 1 bis 5, **dadurch gekennzeichnet, dass** sich das freie, dem Deckelteil (1) abgewandte Ende des schraubenfederartigen Teiles (7) am Boden der Ringkammer (6) des Gehäuseteils (2) abstützt, wobei in dieser Solllage das Teil (7) soweit zusammengedrückt ist, dass sich zwischen den Windungen nur ein geringer Restspalt ergibt, wobei ebenso zwischen der Außenwandung und der Innenwand der Ringkammer (6) nur ein geringer Ringspalt gebildet ist.

7. Vorrichtung nach einem der Ansprüche 1 bis 6, **dadurch gekennzeichnet, dass** das Gehäuseteil (2) und das Deckelteil (1) von einer koaxial zur relativen Drehachse (5) der beiden Teile gerichteten Lochung durchsetzt sind.

8. Vorrichtung nach einem der Ansprüche 1 bis 7, **dadurch gekennzeichnet, dass** am Gehäuseteil (2) eine Kontur (9) zur drehfesten Anordnung an einem Funktionsteil ausgebildet ist.

9. Vorrichtung nach einem der Ansprüche 1 bis 8, **dadurch gekennzeichnet, dass** an der Stirnseite des Deckelteils (1) Konturen (10) zur drehfesten Mitnahme eines Funktionsteils ausgebildet sind.

10. Vorrichtung nach einem der Ansprüche 1 bis 9, **dadurch gekennzeichnet, dass** die Vorrichtung an einem Fahrzeugausstattungsteil, wie einem ausfahrbaren oder ausschwenkbaren Schubfach, einer schwenkbaren Blende, einem schwenkbaren Haltegriff oder dergleichen Funktionsteil angeordnet ist.

11. Vorrichtung nach Anspruch 10, **dadurch gekennzeichnet, dass** das Funktionsteil mittels einer Stellfeder verschwenkbar oder verstellbar angeordnet ist.

12. Vorrichtung nach einem der Ansprüche 10 oder 11, **dadurch gekennzeichnet, dass** das Deckelteil (1) oder das Gehäuseteil (2) mit einer Außenverzahnung versehen ist, die mit einer Zahnstange oder einem Zahnradgetriebe des Fahrzeugausstattungsteils in Eingriff steht.

## Claims

1. A device for the deceleration of a relative rotational movement between two components disposed with rotational or pivoting mobility in relation to one another, having a viscous medium, in particular silicon oil, wherein between the two components at least one gap is formed, in which the viscous medium is located, which by its viscosity exerts a braking force on the moved component,
**characterised in that** the first of the two components is a housing (2) having an annular chamber (6) open on one side and aligned coaxially to the axis of rotation, the second component is a cover part (1) tightly sealing the opening of the annular chamber (6), from which a part (7) constructed in the manner of a helical spring projects on one side and engages in the annular chamber of the housing (2), and the annular chamber (6) is filled with the viscous medium.

2. A device according to Claim 1,
**characterised in that** the part (7) in the manner of a helical spring is integrally formed on the cover part (1).

3. A device according to one of Claims 1 or 2,
**characterised in that** the cross section of the winding of the part in the manner of a helical spring (7) is rectangular.

4. A device according to one of Claims 1 to 3,
**characterised in that** the cover part (1) is rotatably clipped to the housing (2).

5. A device according to one of Claims 1 to 4,
**characterised in that** from the cover part (1) there projects an annular lug, which extends into the mouth of the annular chamber (6) of the housing part (2) and is sealed in relation to the surrounding walls of the annular chamber (6), in particular by means of O rings.

6. A device according to one of Claims 1 to 5,
**characterised in that** the free end, remote from the cover part (1), of the part in the manner of a helical spring (7) is supported on the bottom of the annular chamber (6) of the housing part (2), in this set position the part (7) being compressed to such an extent that only a small residual gap is produced between the windings, with only a small annular gap also being formed between the outer wall and the inner wall of the annular chamber (6).

7. A device according to one of Claims 1 to 6,
**characterised in that** a punch hole directed coaxially to the relative axis of rotation of the two parts passes through the housing part (2) and the cover part (1).

8. A device according to one of Claims 1 to 7,
**characterised in that** a contour (9) for the rotationally fixed arrangement on a functional part is constructed on the housing part (2).

9. A device according to one of Claims 1 to 8,
**characterised in that** contours (10) are constructed on the end side of the cover part (1) for the rotationally fixed entrainment of a functional part.

10. A device according to one of Claims 1 to 9,
**characterised in that** the device is disposed on a vehicle equipment part, such as a pull-out or swing-out drawer, a pivoted panel, a pivoted grab handle or similar functional part.

11. A device according to Clam 10,
**characterised in that** the functional part is pivotably or adjustably disposed by means of an adjusting spring.

12. A device according to one of Claims 10 or 11,
**characterised in that** the cover part (1) or the housing part (2) is provided with external toothing, which meshes with a rack or a gearing of the vehicle equipment part.

## Revendications

1. Dispositif de ralentissement d'un mouvement rotatoire relatif entre deux pièces structurelles agencées avec mobilité rotative ou pivotante l'une par rapport à l'autre, comportant un fluide visqueux, en particulier de l'huile siliconée, sachant qu'il est formé, entre les deux pièces structurelles, au moins un interstice dans lequel se trouve le fluide visqueux qui, du fait de sa viscosité, applique une force de freinage à la pièce structurelle mise en mouvement, **caractérisé par le fait que** la première des deux pièces structurelles est un carter (2) présentant une chambre annulaire (6) ouverte d'un côté et orientée coaxialement à l'axe de rotation ; la seconde pièce structurelle est une pièce de recouvrement (1) obturant hermétiquement l'embouchure de la chambre annulaire (6) et dont une partie (7), réalisée à la manière d'un ressort hélicoïdal, fait saillie d'un côté et pénètre dans la chambre annulaire du carter (2) ; et ladite chambre annulaire (6) est emplie du fluide visqueux.

2. Dispositif selon la revendication 1, **caractérisé par le fait que** la partie (7) du type ressort hélicoïdal fait corps avec la pièce de recouvrement (1).

3. Dispositif selon l'une des revendications 1 ou 2, **caractérisé par le fait que** la section transversale de la spire de la partie (7) du type ressort hélicoïdal est rectangulaire.

4. Dispositif selon l'une des revendications 1 à 3, **caractérisé par le fait que** la pièce de recouvrement (1) est clipsée sur le carter (2) avec faculté de rotation.

5. Dispositif selon l'une des revendications 1 à 4, **caractérisé par le fait qu'**un embout annulaire, faisant saillie au-delà de la pièce de recouvrement (1), pénètre dans l'embouchure de la chambre annulaire (6) de la pièce (2) formant carter et est rendu étanche, notamment au moyen de joints toriques, vis-à-vis des parois environnantes de ladite chambre annulaire (6).

6. Dispositif selon l'une des revendications 1 à 5, **caractérisé par le fait que** l'extrémité libre de la partie (7) du type ressort hélicoïdal, tournée à l'opposé de la pièce de recouvrement (1), prend appui contre le fond de la chambre annulaire (6) de la pièce (2) formant carter, sachant que ladite partie (7) est soumise, dans cette position de consigne, à une compression d'une ampleur telle qu'il ne subsiste qu'un faible interstice résiduel entre les spires, seul un faible interstice annulaire étant semblablement formé entre la paroi extérieure et la paroi intérieure de la chambre annulaire (6).

7. Dispositif selon l'une des revendications 1 à 6, **caractérisé par le fait que** la pièce (2) formant carter et la pièce de recouvrement (1) sont traversées par une perforation dirigée coaxialement à l'axe (5) de rotation relative des deux pièces.

8. Dispositif selon l'une des revendications 1 à 7, **caractérisé par le fait qu'**un profil (9) est façonné, sur la pièce (2) formant carter, en vue de la disposition avec verrouillage rotatif sur une pièce fonctionnelle.

9. Dispositif selon l'une des revendications 1 à 8, **caractérisé par le fait que** des profils (10) sont façonnés, à la face extrême de la pièce de recouvrement (1), en vue de l'entraînement d'une pièce fonctionnelle avec verrouillage rotatif.

10. Dispositif selon l'une des revendications 1 à 9, **caractérisé par le fait que** ledit dispositif est implanté sur une pièce d'équipement de véhicule telle qu'un casier extractible ou pivotant, un obturateur pivotant, une poignée de maintien pivotante ou une pièce fonctionnelle similaire.

11. Dispositif selon la revendication 10, **caractérisé par le fait que** la pièce fonctionnelle est agencée avec faculté de pivotement ou d'ajustement, au moyen d'un ressort de réglage.

12. Dispositif selon l'une des revendications 10 ou 11, **caractérisé par le fait que** la pièce de recouvrement (1) ou la pièce (2) formant carter est pourvue d'une denture extérieure en prise avec une crémaillère ou un engrenage de la pièce d'équipement de véhicule.
